# EUROPÄISCHE PATENTSCHRIFT

(11) **EP 1 567 299 B1**
(45) Veröffentlichungstag und Bekanntmachung des Hinweises auf die Patenterteilung: **26.07.2006**
(21) Anmeldenummer: 03810371.9
(22) Anmeldetag: 29.10.2003
(51) Int. Cl.: B23B 27/06

(54) **WERKZEUG ZUM SCHNEIDEN VON GEWINDEN**
TOOL FOR THE CUTTING OF THREADS
OUTIL DE COUPE DE FILETS

(30) Priorität: 06.11.2002 DE 10252040
(43) Veröffentlichungstag der Anmeldung: 31.08.2005
(73) Patentinhaber: Scharmann, Manfred, 35327 Ulrichstein-Wohnfeld (DE)
(72) Erfinder: Scharmann, Manfred, 35327 Ulrichstein-Wohnfeld (DE)
(74) Vertreter: Wolf, Günter
(86) Internationale Anmeldenummer: PCT/DE2003/003595
(87) Internationale Veröffentlichungsnummer: WO 2004/041464

(56) Entgegenhaltungen:
- DE-C- 927 783
- DE-U- 9 203 555
- US-A- 1 475 561
- US-A- 5 609 446

## Beschreibung

Die Erfindung betrifft ein Werkzeug zum Schneiden von Gewinden gemäß dem Oberbegriff des Patentanspruchs 1. Ein derartiges Werkseug ist beispielweise aus DE 9203555U bekannt.

Ein aus der DE 36 35 655 A1 bekanntes, als Gewindebohrer ausgebildete Gewindeschneidwerkzeug trägt an seinem Kopf mehrere über den Umfang verteilt angeordnete Gewindeschneideinsätze, die radial ausgerichtet sind. Um den Gewindebohrer als Mehrzweckwerkzeug für die Herstellung verschiedenartigster Gewinde verwenden zu können und um im Falle einer Abnutzung nur eine Teilerneuerung vornehmen zu müssen, sind die Schneideneinsätze durch Spannschrauben auswechselbar gehalten und tragen an ihren außenliegenden Stirnseiten ein Gewindeprofil.

Ferner ist aus der DE 43 25 999 C2 ein rundlaufendes Schneidwerkzeug bekannt, das pro Schneidenebene vier über den Umfang verteilt angeordnete Schneidplatten aufweist. Auch bei diesem Schneidwerkzeug sind die Schneidplatten mit Spannschrauben am Werkzeugkörper lösbar, aber fest angeordnet. Allerdings dient dieses Werkzeug nicht zum Anfertigen von Bohrungen mit Gewinde.

Aus der DE 42 14 355 A1 ist ferner ein Schneidwerkzeug bekannt, an dessen Kopf eine Gewindeschneidplatte mittels einer Spannschraube befestigbar ist. Die Gewindeschneidplatte weist dabei bis zu drei Schneidkanten auf, von denen jeweils eine bis zu ihrem Verschleiß verwendet wird.

Schließlich ist aus der DE 100 18 861 A1 noch ein Befestigungssystem für einen Schneidkörper an einem Werkzeug bekannt, bei dem statt der üblichen Spannschraube ein spezielles Klemmelement Verwendung findet. Genau wie der erfindungsgemäße Gewindeschneider gemäß Patentanspruch 1 ist auch dieses Werkzeug mit zwei über den Umfang verteilten Schneidplatten versehen, die beim nach der DE 100 18 861 A1 bekannten Werkzeug allerdings in unterschiedlichen Axialebenen angeordnet sind.

Bezüglich ihres vorgesehenen Verwendungszwecks haben sich die oben genannten Werkzeuge insoweit bewährt. Ausgangspunkt der Erfindung ist der Herstellungsprozess von Innengewinden an Vollkörpern mit wahlweise Durchgangs- oder Sackbohrung sowie auch von Außengewinden an Bolzen oder dergleichen. Zur Herstellung beispielsweise eines Innengewindes sind üblicher Weise folgende Arbeitsschritte erforderlich:

Zunächst wird beispielsweise mit einem Vollbohrer eine Bohrung in das Werkstück eingebracht. Als nächstes wird mit Hilfe eines sogenannten Stechstahls der Gewindeanschnitt und -auslauf eingedreht. Danach wird mit einem Gewindeschneidstahl ein Gewinde in die Bohrung geschnitten. Schließlich wird nochmals mit dem Stechstahl der Gewindeanschnitt und -auslauf entgratet. Bei Bedarf wird auch das Gewinde selbst nochmals mit dem Gewindeschneidstahl überdreht.

Der Erfindung liegt die Aufgabe zugrunde, ein Werkzeug der eingangs genannten Art bereitzustellen, mit dessen Hilfe sich der am Beispiel eines Innengewindes beschriebene Gewindeschneidprozess vereinfachen läßt.

Diese Aufgabe ist mit einem Werkzeug zum Schneiden von Gewinden der eingangs genannten Art durch die Merkmale des Patentanspruchs 1 gelöst.

Nach der Erfindung ist also vorgesehen, am Werkzeugkörper eine speziell zum Entgraten und zum Einbringen des Gewindeanschnitts und -auslaufs ausgebildete Stech- bzw. Schneidplatte vorzusehen, die wechselweise zur Gewindeschneidplatte zum Einsatz kommt. Bezogen auf den oben beschriebenen Ablauf vereinfacht sich die Herstellung des Innengewindes also wie folgt (entsprechend übertragen gilt dies auch für ein Außengewinde):

Zunächst wird ebenfalls beispielsweise mit einem Vollbohrer eine Bohrung in das Werkstück eingebracht. Als nächstes wird mit der am erfindungsgemäßen Werkzeug befestigten Stechplatte bzw. mit deren schräg verlaufenden Schneidenabschnitten der Gewindeanschnitt und -auslauf in das Werkstück eingedreht. Zur Einbringung des Gewindes wird das erfindungsgemäße Werkzeug dann wahlweise gedreht oder quer zur Werkzeuglängsachse verschoben (je nach dem ob mit feststehendem Werkzeug und drehendem Werkstück oder umgekehrt gearbeitet wird), so dass der Gewindeschneidstahl mit dem Werkstück in Eingriff kommt. Mit diesem wird dann ein Gewinde in die Bohrung geschnitten. Schließlich werden, und zwar ohne jeden Werkzeugwechsel, nach nochmaligem Umstellen des Werkzeugs der Gewindeanschnitt, der Gewindeauslauf aber auch das Gewinde selbst mit der Stechplatte entgratet, wobei zur Feinentgratung erforderlichenfalls auch nochmals der Gewindeschneidstahl zum Einsatz kommt.

Mit Hilfe des erfindungsgemäßen Werkzeugs enfallen also schon in dessen einfachster Ausführungsform zwei Werkzeugwechselzeiten, da für verschiedene Bearbeitungsschritte ein einziges Werkzeug (mit mindestens zwei verschiedenen Schneiden) verwendet werden kann und der üblicherweise eingesetzte, die Werkzeuge aufnehmende Revolver nicht mehr gedreht werden muss, was auch zusätzlich zu einer Verringerung an Maßschwankungen und zu einem zusätzlichen Werkzeughalteplatz am Revolver der Werkzeugmaschine führt.

Vorteilhafte Weiterbildungen ergeben sich aus den abhängigen Ansprüchen, die nachfolgend noch genauer erörtert werden.

Das erfindungsgemäße Werkzeug einschließlich seiner vorteilhaften Weiterbildungen gemäß der abhängigen Ansprüche wird nachfolgend anhand der zeichnerischen Darstellung eines Ausführungsbeispiels näher erläutert.

Es zeigt
- Fig. 1: in Vorderansicht das Werkzeug mit der erfindungsgemäßen Stechplatte;
- Fig. 2: in vergrößerter Darstellung die Stechplatte gemäß Fig. 1;
- Fig. 3: das Werkzeug gemäß Fig. 1 in Draufsicht;
- Fig. 4: in Rückansicht das Werkzeug gemäß Fig. 1 mit einer drei Schneiden aufweisenden Gewindeschneidplatte;
- Fig. 5: einen unbearbeiteten Vollkörper;
- Fig. 6: teilweise geschnitten den Vollkörper gemäß Fig.5 mit einer Sackbohrung;
- Fig. 7: teilweise im Schnitt der Vollkörper gemäß Fig. 6 mit einem in die Bohrung eingedrehten Geweinde;
- Fig. 8: der Vollkörper gemäß Fig. 7 mit Gewindeanschnitt und -auslauf nach Einsatz der erfindungsgemäßen Stechplatte; und
- Fig. 9: in vergrößerter Darstellung die Stechplatte zur Herstellung des Gewindeanschnitts und -auslaufs in Fig. 8.

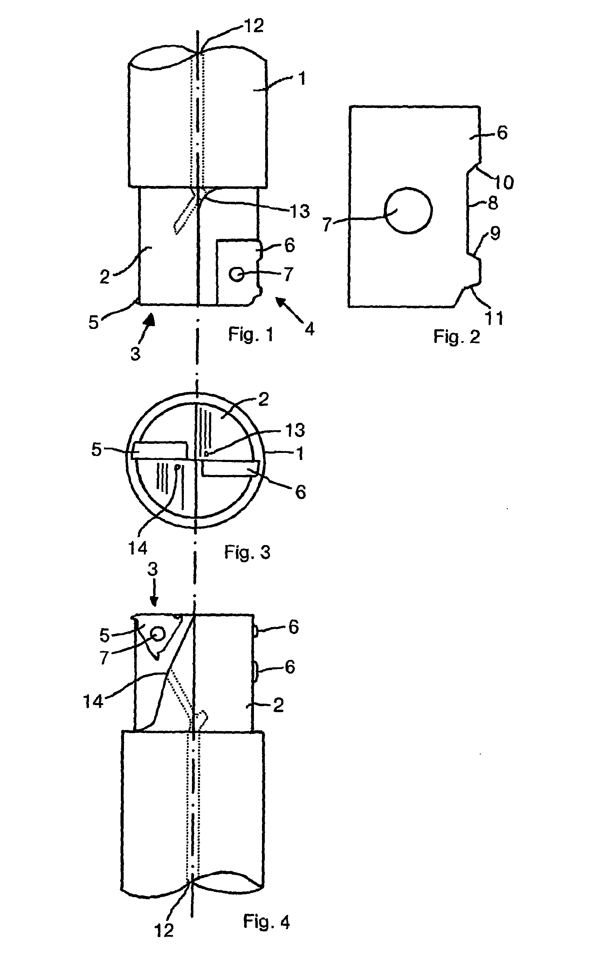

In den Figuren 1 bis 4 ist das erfindungsgemäße Werkzeug zum Schneiden von Gewinden (auch konische Gewinde) in Vorder-, Drauf- und Rückansicht dargestellt. Das Werkzeug umfasst einen bolzenförmigen Werkzeugkörper 1, der vorzugsweise im wesentlichen zylindrisch ausgebildet ist, aber an mindestens einer Stelle eine von der Zylinderform abweichende Ausprägung aufweist, um einen guten Formschluss des Werkzeuges mit dem Antriebselement zu gewährleisten. Das Werkzeug weist darüber hinaus einen an mindestens einem Ende vorgesehenen Werkzeuganordnungsbereich 2 auf, an dem über den Umfang verteilt mindestens zwei Bereiche 3, 4 zur Aufnahme von Schneidplatten 5, 6 vorgesehen sind. Ferner ist vorteilhaft vorgesehen, dass der Werkzeuganordnungsbereich 2 in Form eines gewindedurchmesserangepaßten Absatzes mit den Bereichen 3, 4 zur Aufnahme der Schneidplatten 5, 6 ausgebildet ist. Diese Schneidplatten 5, 6 sind mittels Spannelementen 7 an den wie Auflagerflächen ausgebildeten Bereichen 3, 4 lösbar, aber fest angeordnet, wobei die Spannelemente 7 vorzugsweise in Form von die Schneidplatten 5, 6 durchgreifenden Schrauben ausgebildet sind, die jeweils in in den Bereichen 3, 4 zur Aufnahme der Schneidplatten 5, 6 vorgesehene Gewinde eingreifen. Mindestens eine der Schneidplatten 5, 6 ist als Gewindeschneidplatte ausgebildet. Diese Schneidplatte 5 ist ferner, wie dargestellt, vorzugsweise mit mehreren Schneiden (hier drei) versehen, um bei Abnutzung zumindest nicht sofort vollständig ausgetauscht werden zu müssen.

Wesentlich für das erfindungsgemäße Werkzeug ist nun, dass mindestens eine weitere, als sogenannte Stechplatte ausgebildete Schneidplatte 6 einen der Gewindelänge entsprechenden Bereich und beidseitig dieses Bereiches jeweils zusätzliche, schräg zur Gewindesachse verlaufende Schneidenabschnitte 9, 10 zur Erzeugung eines Gewindeanschnitts und -auslaufs aufweist. Dabei ist der genannte Bereich, wie dargestellt, vorzugsweise als parallel zur Gewindeoberfläche verlaufender Schneidenabschnitt 8 zum Entgraten des Gewindes ausgebildet.

Mit Verweis auf Fig. 2 ist insbesondere zur Herstellung eines guten Übergangs zwischen Vollkörper und Gewinde vorteilhaft vorgesehen, dass die schräg zur Gewindeachse verlaufenden Schneidenabschnitt 9, 10 an der Stechplatte 6 jeweils einen Winkel zwischen 30° und 60°, vorzugsweise 45°, mit der Gewindeachse einschließen. Darüber hinaus ist für spezielle Gewindegeometrien vorgesehen, dass an der Stechplatte 6 mindestens an einer Seite neben den Schneidenabschnitten 8, 9, 10 ein weiterer Schneidenabschnitt 11 zur Bearbeitung des Bereiches neben dem Gewinde angeordnet ist.

Wie insbesondere aus Fig. 3 ersichtlich, ist vorgesehen, die Bereiche 3, 4 zur Aufnahme der Schneidplatten 5, 6 an gegenüberliegenden Seiten des Werkzeugkörpers 1 anzuordnen (hier 180°), wobei die Schneidplatten 5, 6 zur Realisierung eines günstigen Schneidwinkels vorzugsweise zueinander in einem einen Winkel von 165° bzw. 195° angeordnet sind (nicht dargestellt).

Um das Werkzeug vor Überhitzung und damit vor Beschädigung zu bewahren, ist, wie dargestellt, am Werkzeugkörper 1 eine Kühl- und/oder Schmiermittelzuführung 12 vorgesehen, wobei jeweils eine Austrittsöffnung 13, 14 für das Schmier- und/oder Kühlmittel in den Bereichen 3, 4 zur Aufnahme der Schneidplatten 5, 6 angeordnet ist.

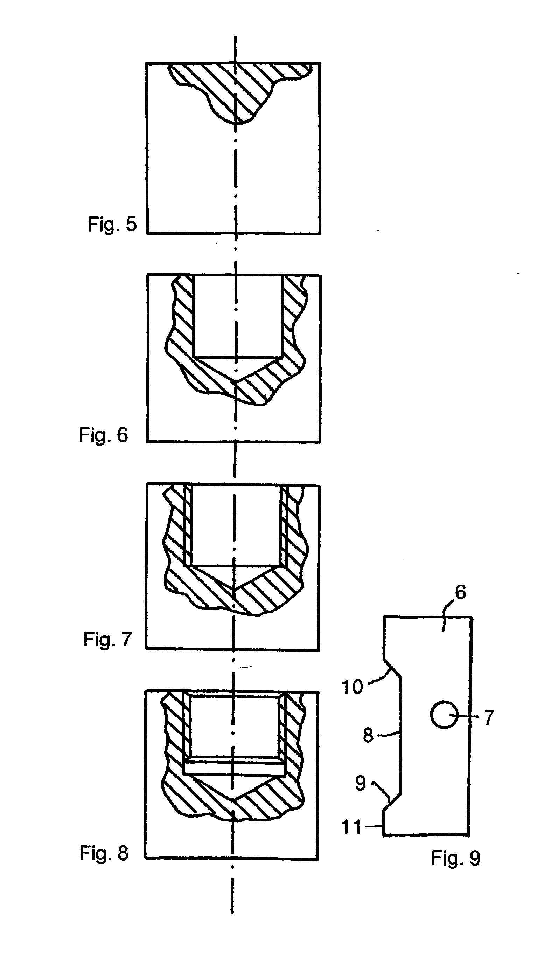

In den Figuren 5 bis 8 ist ein Anwendungsbeispiel des erfindungsgemäßen Werkzeugs dargestellt:

Fig. 5 zeigt dabei zunächst einen bezüglich des vorzusehenden Gewindes unbearbeiteten Vollkörper. In diesen wird gemäß Fig. 6 mit einem Bohrer eine für das vorgesehene Gewinde geeignete Bohrung eingebracht. Dabei und auch bei allen weiteren Bearbeitungsschritten kann entweder das Werkzeug oder das Werkstück gedreht werden, denn entscheidend für die Bearbeitung ist allein die Relativbewegung zwischen Werkzeug und Werkstück.

Fig. 7 zeigt den Vollkörper mit Bohrung, in die bereits mit der Gewindeschneidplatte 5 ein Gewindegang eingeschnitten worden ist. Dieses Gewinde ist aber noch nicht entgratet und ausserdem fehlen diesem Gewinde Anschnitt und Auslauf, d. h. das Einschrauben einer passenden Schraube wäre in diesem Bearbeitungszustand noch nicht gut möglich, zumal darüber hinaus die Gefahr besteht, sich an den scharfkantigen Gewinderändern zu verletzen.

Dieses Problem wird durch den nächsten Bearbeitungsschritt mit der erfindungsgemäßen Stechplatte 6 gelöst. Wie aus Fig. 8 zu erkennen, weist das Gewinde gemäß Fig. 7 nunmehr einerseits einen Gewindeanschnitt und andererseits einen Gewindeauslauf auf, wobei ersterer mittels des Schneidenabschnittes 10 und zweiterer mittels des Schneidenabschnittes 11 der in Fig. 9 dargestellten Stechplatte 6 erzeugt wurde. Darüber hinaus ist das Gewinde gemäß Fig. 7 mittels des Schneidenabschnittes 8 entgratet worden, was zeichnerisch nicht genauer darstellbar ist.

Die Stechplatte 6 gemäß Fig. 9 unterscheidet sich im übrigen von der gemäß Fig. 2 darin, dass der zusätzliche Schneidenabschnitt 11 rechtwinklig ausgebildet ist, d. h. dieser erzeugt, wie in Fig. 8 dargestellt, einen zylindrischen Abschluss am Gewindeauslauf.

### Bezugszeichenliste

- 1: Werkzeugkörper
- 2: Werkzeuganordnungsbereich
- 3: Bereich für Schneidplatte
- 4: Bereich für Schneidplatte
- 5: Schneidplatte
- 6: Schneidplatte
- 7: Spannelement
- 8: Schneidenabschnitt
- 9: Schneidenabschnitt
- 10: Schneidenabschnitt
- 11: Schneidenabschnitt
- 12: Kühlmittelzuführung
- 13: Austrittsöffnung
- 14: Austrittsöffnung

## Patentansprüche

1. Werkzeug zum Schneiden von Gewinden, umfassend einen bolzenförmigen Werkzeugkörper (1) mit einem an mindestens einem Ende vorgesehenen Werkzeuganordnungsbereich (2), an dem über den Umfang verteilt mindestens zwei Bereiche (3, 4) zur Aufnahme von Schneidplatten (5, 6) vorgesehen sind, die mittels Spannelementen (7) an den wie Auflagerflächen ausgebildeten Bereichen (3, 4) lösbar, aber fest angeordnet sind, wobei mindestens eine Schneidplatte (5) als Gewindeschneidplatte ausgebildet ist,
**dadurch gekennzeichnet,**
**dass** mindestens eine weitere, als Stechplatte ausgebildete Schneidplatte (6) einen der Gewindelänge entsprechenden Bereich und beidseitig dieses Bereiches jeweils schräg zur Gewindeachse verlaufende Schneidenabschnitte (9, 10) zur Erzeugung eines Gewindeanschnitts und -auslaufs aufweist.

2. Werkzeug nach Anspruch 1,
**dadurch gekennzeichnet,**
**dass** der der Gewindelänge entsprechende Bereich als ein parallel zur Gewindeoberfläche verlaufender Schneidenabschnitt (8) zum Entgraten des Gewindes ausgebildet ist.

3. Werkzeug nach Anspruch 1 oder 2,
**dadurch gekennzeichnet,**
**dass** der Werkzeugkörper (1) zylindrisch und der Werkzeuganordnungsbereich (2) in Form eines gewindedurchmesserangepaßten Absatzes mit den Bereichen (3, 4) zur Aufnahme der Schneidplatten (5, 6) ausgebildet ist.

4. Werkzeug nach einem der Anspruch 1 bis 3,
**dadurch gekennzeichnet,**
**dass** die Bereiche (3, 4) zur Aufnahme der Schneidplatten (5, 6) an gegenüberliegenden Seiten des Werkzeugkörpers (1) angeorndet sind.

5. Werkzeug nach Anspruch 4,
**dadurch gekennzeichnet,**
**dass** die Schneidplatten (5, 6) zueinander in einem einen Winkel von 165° bzw. 195° angeordnet sind.

6. Werkzeug nach einem der Ansprüche 1 bis 5,
**dadurch gekennzeichnet,**
**dass** die Spannelemente (7) in Form von die Schneidplatten (5, 6) durchgreifenden Schrauben ausgebildet sind, die jeweils in in den Bereichen (3, 4) zur Aufnahme der Schneidplatten (5, 6) vorgesehene Gewinde eingreifen.

7. Werkzeug nach einem der Ansprüche 1 bis 6,
**dadurch gekennzeichnet,**
**dass** die schräg zur Gewindeachse verlaufenden Schneidenabschnitte (9, 10) an der Stechplatte (6) jeweils einen Winkel zwischen 30° und 60°, vorzugsweise 45°, mit der Gewindeachse einschließen.

8. Werkzeug nach einem der Ansprüche 1 bis 7,
**dadurch gekennzeichnet,**
**dass** an der Stechplatte (6) mindestens an einer Seite neben den Schneidenabschnitten (8, 9, 10) ein weiterer Schneidenabschnitt (11) zur Bearbeitung eines Bereiches neben dem Gewinde vorgesehen ist.

9. Werkzeug nach einem der Ansprüche 1 bis 8,
**dadurch gekennzeichnet,**
**dass** am Werkzeugkörper (1) eine Kühl- und/oder Schmiermittelzuführung (12) vorgesehen ist, wobei jeweils eine Austrittsöffnung (13, 14) in den Bereichen (3, 4) zur Aufnahme der Schneidplatten (5, 6) angeordnet ist.

## Claims

1. A tool for cutting threads, comprising a bolt-shaped tool body (1) having a tool positioning region (2) provided on at least one end, on which at least two regions (3, 4) are provided distributed around the circumference for receiving cutting plates (5, 6), which are removably but solidly positioned using clamping elements (7) on the regions (3, 4) implemented like bearing surfaces, at least one cutting plate (5) being implemented as a thread cutting plate,
**characterized in that** at least one further cutting plate (6), implemented as a plunging plate, has a region corresponding to the thread length and, on both sides of this region, has cutting sections (9, 10), each running diagonally to the thread axis, for producing a thread chamfer and runout.

2. The tool according to Claim 1,
**characterized in that** the region corresponding to the thread length is implemented as a cutting section (8) running parallel to the thread surface for deburring the thread.

3. The tool according to Claim 1 or 2,
**characterized in that** the tool body (1) is cylindrical and the tool positioning region (2) is implemented in the form of a shoulder, tailored to the thread diameter, having the regions (3, 4) for receiving the cutting plates (5, 6).

4. The tool according to one of Claims 1 to 3,
**characterized in that** the regions (3, 4) for receiving the cutting plates (5, 6) are positioned on diametrically opposing sides of the tool body (1).

5. The tool according to Claims 4,
**characterized in that** the cutting plates (5, 6) are positioned at an angle of 165° and/or 195° to one another.

6. The tool according to one of Claims 1 to 5,
**characterized in that** the clamping elements (7) are implemented in the form of screws which penetrate the cutting plates (5, 6), each of which engages in threads provided in the regions (3, 4) for receiving the cutting plates (5, 6).

7. The tool according to one of Claims 1 to 6,
**characterized in that** the cutting sections (9, 10) on the plunging plate (6) running diagonal to the thread axis each enclose an angle between 30° and 60°, preferably 45°, with the thread axis.

8. The tool according to one of Claims 1 to 7,
**characterized in that** a further cutting section (11) for machining a region next to the thread is provided on the plunging plate (6) on at least one side next to the cutting sections (8, 9, 10).

9. The tool according to one of Claims 1 to 8,
**characterized in that** a coolant and/or lubricant feed (12) is provided on the tool body (1), an outlet opening (13, 14) being positioned in each of the regions (3, 4) for receiving the cutting plates (5, 6).

## Revendications

1. Outil de taraudage comportant un corps d'outil (1) en forme de boulon, avec une zone de placement d'outil (2) prévue sur au moins une extrémité, sur laquelle on a prévu au moins deux zones (3, 4) réparties sur le pourtour pour le logement de matrices de découpage (5, 6), qui au moyen d'éléments de serrage (7) sont placées de façon amovible, mais solide sur les zones (3, 4) conçues comme des surfaces portantes, au moins une matrice de découpage (5) étant formée en tant que matrice de taraudage,
**caractérisé en ce que**
au moins une matrice de découpage supplémentaire (6) conçue sous la forme d'une matrice de soyage comporte une zone correspondant à la longueur du taraudage et des deux côtés de ladite zone respectivement des tronçons de taillant (9, 10) s'étendant en oblique par rapport à l'axe detaraudage, pour créer une entrée de taraud et une fin de filet.

2. Outil selon la revendication 1,
**caractérisé en ce que**
la zone correspondant à la longueur du taraudage est conçue sous la forme d'un tronçon de taillant (8) s'étendant à la parallèle de la surface du taraudage pour l'ébarbage du taraudage.

3. Outil selon la revendication 1 ou 2,
**caractérisé en ce que**
le corps de l'outil (1) est cylindrique et la zone de placement de l'outil (2) est conçue sous la forme d'un talon adapté au diamètre du taraudage, avec les zones (3, 4) pour le logement des matrices de découpage (5, 6).

4. Outil selon l'une quelconque des revendications 1 à 3,
**caractérisé en ce que**
les zones (3, 4) pour le logement des matrices de découpage (5, 6) sont disposées sur des faces opposées du corps de l'outil (1).

5. Outil selon la revendication 4,
**caractérisé en ce que**
les matrices de découpage (5, 6) sont disposées sous un angle mutuel de 165°, respectivement de 195°.

6. Outil selon l'une quelconque des revendications 1 à 5,
**caractérisé en ce que**
les éléments de serrage (7) sont conçus sous la forme de vis traversant les matrices de découpage (5, 6), qui s'engagent respectivement dans des taraudages prévus dans les zones (3, 4) pour le logement des matrices de découpage (5, 6).

7. Outil selon l'une quelconque des revendications 1 à 6,
**caractérisé en ce que**
les tronçons de taillant (9, 10) s'étendant en oblique par rapport à l'axe du taraudage sur la matrice de soyage (6) forment respectivement une angle compris entre 30° et 60°, de préférence de 45° avec l'axe de taraudage.

8. Outil selon l'une quelconque des revendications 1 à 7,
**caractérisé en ce que**
sur la matrice de soyage (6), au moins sur une face à côté des tronçons de taillant (8, 9, 10), on a prévu un tronçon de taillant supplémentaire (11) pour l'usinage d'une zone à côté du taraudage.

9. Outil selon l'une quelconque des revendications 1 à 8,
**caractérisé en ce que**
sur le corps de l'outil (1), on a prévu une alimentation de réfrigérant et/ou de lubrifiant (12), respectivement un orifice de sortie (13, 14) étant disposé dans les zones (3, 4) de logement des matrices de découpage (5, 6).
